# EUROPEAN PATENT APPLICATION

(11) **EP 4 379 844 A1**
(43) Date of publication of application: **05.06.2024**
(21) Application number: 22849156.9
(22) Date of filing: 30.06.2022
(51) Int. Cl.: H01M 4/131, H01M 4/1391, H01M 4/36

(54) **POSITIVE ELECTRODE FOR SECONDARY BATTERIES, METHOD FOR PRODUCING SAME, AND SECONDARY BATTERY**

(30) Priority: 29.07.2021 JP 2021124737
(71) Applicant: Panasonic Intellectual Property Management Co., Ltd., Kadoma-shi, Osaka 571-0057 (JP)
(72) Inventor: SATOU Yoshinori, Kadoma-shi, Osaka 571-0057 (JP); NISHIMORI Yuta, Kadoma-shi, Osaka 571-0057 (JP); SASAKI Takashi, Kadoma-shi, Osaka 571-0057 (JP); HARADA Maho, Kadoma-shi, Osaka 571-0057 (JP); NAKAYAMA Takahito, Kadoma-shi, Osaka 571-0057 (JP); NISHINO Hajime, Kadoma-shi, Osaka 571-0057 (JP)
(74) Representative: Novagraaf International SA
(86) International application number: PCT/JP2022/026274
(87) International publication number: WO 2023/008089

(57) **Abstract**

A positive electrode for a secondary battery including a positive electrode current collector, and a positive electrode active material layer supported on the positive electrode current collector. The positive electrode active material layer includes active material particles and an oxide film covering at least part of surfaces of the active material particles. The active material particles include a lithium-containing transition metal oxide, and the oxide film contains an oxide of a first element other than nonmetal elements. When a thickness of the positive electrode active material layer is denoted by TA, Tb > Tt is satisfied, where the Tb and the Tt are thicknesses of the oxide film at a position of 0.25TA and at a position of 0.75TA, respectively, from a surface of the positive electrode current collector in the positive electrode active material layer.

## Description

### [Technical Field]

The present disclosure mainly relates to a positive electrode for a secondary battery.

### [Background Art]

Patent Literature 1 proposes a lithium-ion battery including a positive electrode, a nonaqueous liquid electrolyte, and a negative electrode. The positive electrode includes a conductive material comprising a carbon material, and deposits of aluminum oxide dispersed on the surface of the conductive material, and a lithium-containing oxide active material having an upper limit potential versus metal lithium redox potential of 4.5 V (vs. Li/Li+) or more. The deposits of aluminum oxide have a maximum diameter of 1 nm or more and 20 nm or less.

Patent Literature 2 proposes a positive electrode for a secondary battery including a positive electrode current collector, and a positive electrode active material layer provided on a surface of the positive electrode current collector and containing a positive electrode material. The positive electrode material includes positive electrode active material particles, a first coating attached to surfaces of the positive electrode active material particles and containing an oxide X of a metal element M1, and a second coating attached to a surface of the first coating and having lithium-ion permeability. The second coating contains an oxide Y represented by LiₓM₂O_{y}, where 0.5 ≤ x < 4 and 1 ≤ y < 6, and M₂ is at least one selected from the group consisting of B, Al, Si, P, S, Ti, V, Zr, Nb, Ta, and La.

### [Citation List]

### [Patent Literature]

Patent Literature 1: Japanese Laid-Open Patent Publication No. 2017-174612
Patent Literature 2: International Publication WO2017-174612

### [Summary of Invention]

### [Technical Problem]

Patent Literature 1 attempts to suppress the decomposition of nonaqueous liquid electrolyte on the surface of the conductive material by attaching aluminum oxide to the surface of a conductive material made of a carbon material, and thus, to improve the capacity of the lithium-ion battery. However, deposits of aluminum oxide dispersed on the surface of the conductive material disadvantageously increase the resistance of the positive electrode. In Patent Literature 2, too, the first coating and the second coating may increase the resistance of the positive electrode.

On the other hand, as the energy density of a secondary battery is increased, it is more required to improve the safety. In particular, it is important to reduce the heat generation due to internal short circuit. When the temperature of the active material particles (particles of positive electrode active material) in the vicinity of the short-circuited point rises due to heat generation, the safety of the secondary battery is reduced.

### [Solution to Problem]

One aspect of the present disclosure relates to a positive electrode for a secondary battery, including: a positive electrode current collector; and a positive electrode active material layer supported on the positive electrode current collector, wherein the positive electrode active material layer includes active material particles and an oxide film covering at least part of surfaces of the active material particles, the active material particles include a lithium-containing transition metal oxide, the oxide film contains an oxide of a first element other than nonmetal elements, and Tb > Tt or Pb > Pt is satisfied, where when a thickness of the positive electrode active material layer is denoted by TA, the Tb is a thickness of the oxide film and the Pb is a presence probability of the first element at a position of 0.25TA from a surface of the positive electrode current collector in the positive electrode active material layer, and the Tt is a thickness of the oxide film and the Pt is a presence probability of the first element at a position of 0.75TA from the surface of the positive electrode current collector in the positive electrode active material layer.

Another aspect of the present disclosure relates to a secondary battery, including: the above-described positive electrode for a secondary battery; a negative electrode; a nonaqueous electrolyte; and a separator interposed between the positive electrode and the negative electrode.

Yet another aspect of the present disclosure relates to a method for producing a positive electrode for a secondary battery, the method including: a step of preparing active material particles including a lithium-containing transition metal oxide; a step of preparing a positive electrode current collector; and a step of forming a positive electrode active material layer including the active material particles on a surface of the positive electrode current collector; the step of forming a positive electrode active material layer including a supporting step of allowing the active material particles to be supported on a surface of the positive electrode current collector, to form a precursor layer, and a film formation step of, after the supporting step, exposing the active material particles to a gas phase containing a first element other than nonmetal elements, to form an oxide film so as to cover at least part of surfaces of the active material particles, wherein the oxide film contains an oxide of the first element, and Tb > Tt or Pb > Pt is satisfied, where when a thickness of the positive electrode active material layer is denoted by TA, the Tb is a thickness of the oxide film and the Pb is a presence probability of the first element at a position of 0.25TA from a surface of the positive electrode current collector in the positive electrode active material layer, and the Tt is a thickness of the oxide film and the Pt is a presence probability of the first element at a position of 0.75TAfrom the surface of the positive electrode current collector in the positive electrode active material layer.

### [Advantageous Effects of Invention]

According to the present disclosure, it is possible to improve the safety when an internal short circuit occurs in the battery, while suppressing the increase in resistance.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic cross-sectional view of an essential part of a positive electrode according to one embodiment of the present disclosure.
[FIG. 2] An enlarged cross-sectional view of the essential part of the positive electrode of FIG. 1.
[FIG. 3] A partially-cutaway schematic oblique view of a nonaqueous electrolyte secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

The secondary battery includes at least a nonaqueous electrolyte secondary battery, such as a lithium-ion battery and a lithium-metal secondary battery.

### A. Positive electrode for secondary battery

A positive electrode for a secondary battery according to an embodiment of the present disclosure includes a positive electrode current collector and a positive electrode active material layer supported on the positive electrode current collector.

### [Positive electrode current collector]

The positive electrode current collector is composed of a sheet-like conductive material. As the positive electrode current collector, a non-porous conductive substrate (e.g., metal foil), and a porous conductive substrate (e.g., mesh, net, punched sheet) is used.

### [Positive electrode active material layer]

The positive electrode active material layer is supported on one or both surfaces of the positive electrode current collector. The positive electrode active material layer is usually a positive electrode mixture layer composed of a positive electrode mixture, and is in the form of a membrane or film. The positive electrode mixture contains active material particles (particles of positive electrode active material) as an essential component.

The positive electrode active material layer includes active material particles and an oxide film covering at least part of surfaces of the active material particles. The active material particles include a lithium-containing transition metal oxide. The positive electrode active material layer is formed on a surface of the positive electrode current collector. The positive electrode active material layer may be formed on one surface of the positive electrode current collector, and may be formed on both surfaces thereof.

### [Oxide film]

The oxide film covers at least part of surfaces of the active material particles which are secondary particles. The oxide film contains an oxide of a first element other than nonmetal elements. The oxide of a first element other than nonmetal elements has a crystal structure dissimilar to that of the active material particles, or is amorphous. The oxide of a first element other than nonmetal elements is electrochemically inactive and may not necessarily exhibit substantial capacity. Such an oxide film has a function of improving the safety when an internal short circuit occurs in the battery, while suppressing the increase in the resistance of the positive electrode. When an internal short circuit occurs, electric current concentrates in the vicinity of the short-circuited point, generating heat. When the temperature of the active material particles (particles of positive electrode active material) in the vicinity of the short-circuited point rises due to heat generation, the resistance of the active material particles tends to drop rapidly. On the other hand, the oxide film covering at least part of the surfaces of the active material particles does not show a rapid drop in resistance even when the temperature rises due to heat generation, and acts as a resistance component that suppresses the increase in the short-circuit current.

Here, when the thickness of the positive electrode active material layer is denoted by TA, Tb > Tt is satisfied, where the Tb is a thickness of the oxide film at a position of 0.25TAfrom the surface of the positive electrode current collector in the positive electrode active material layer, and the Tt is a thickness of the oxide film at a position of 0.75TA from the surface of the positive electrode current collector in the positive electrode active material layer. For example, the oxide film may be formed thicker on the surfaces of the active material particles as closer to the surface of the positive electrode current collector. At this time, Pb > Pt is satisfied, where the Pb is a presence probability of the first element at the position of 0.25TA and the Pt is a presence probability of the first element at the position of 0.75TA.

By forming an oxide film to have a thickness distribution as above, the increase in the short-circuit current due to an abrupt drop of the resistance of the active material particles can be effectively suppressed. When the active material particles present in the vicinity of the positive electrode current collector are preferentially covered with an oxide film, this can increase the effect of improving the safety when an internal short circuit occurs in the battery. On the other hand, the amount of the oxide film covering the active material particles present away from the surface of the positive electrode current collector becomes relatively small, facilitating the progress of the battery reaction during normal use of the battery. That is, it is possible to improve the safety while suppressing the increase in the internal resistance of the battery.

The surface of the positive electrode current collector is equivalent to an interface between the positive electrode active material layer and the positive electrode current collector. The position of the positive electrode active material layer at 0.25TA from the surface of the positive electrode current collector in the positive electrode active material layer is equivalent to a position of 0.25TA from the interface between the positive electrode active material layer and the positive electrode current collector. The position of the positive electrode active material layer at 0.75TA from the surface of the positive electrode current collector in the positive electrode active material layer is equivalent to a position of 0.75TAfrom the interface between the positive electrode active material layer and the positive electrode current collector.

The thickness Tb and the thickness Tt may satisfy 0 ≤ Tt/Tb < 1, may satisfy 0.02 ≤ Tt/Tb ≤ 0.8, and may satisfy 0.2 ≤ Tt/Tb ≤ 0.5. Likewise, the presence probabilities Pb and Pt may satisfy 0 ≤ Pt/Pb < 1, may satisfy 0.02 ≤ Pt/Pb ≤ 0.8, and may satisfy 0.2 ≤ Pt/Pb ≤ 0.5.

The thicknesses Tb and Tt of the oxide film can be measured by observing a crosssection of the active material particles using a SEM or TEM.

First, the secondary battery is disassembled, to take out the positive electrode, followed by processing with a cross section polisher (CP) to obtain a cross section of the positive electrode active material layer. In a cross-sectional image obtained using a SEM or TEM, 10 active material particles are selected, each of which partially overlaps a straight line drawn at a position of 0.25TA from the surface of the positive electrode current collector in the positive electrode active material layer and has a maximum diameter of 5 µm or more. For each particle, the thickness of the oxide film is measured at one or two points of intersection of the straight line and the outer edge of the active material particle. The average value of the thicknesses at up to these 20 points is determined. After calculating this average value, with the data differing by 20% or more from the obtained average value excluded, an average value is calculated again. This corrected average value is defined as the thickness Tb of the oxide film at the 0.25TA point. Likewise, using a straight line drawn at a position of 0.75TA from the surface of the positive electrode current collector in the positive electrode active material layer, the thickness Tt of the oxide film at the 0.75TA point is calculated.

A point where the oxide film starts is the interface between the active material particles and the oxide film. For example, a point where the intensity of the peak attributed to the constituent element of the active material particles obtained by SEM-EDS analysis is 1/10 or less of the peak attributed to the first element can be regarded as the point where the oxide film starts. A point where the oxide film ends can be regarded as, for example, a point where the intensity of the peak attributed to the first element obtained by SEM-EDS analysis becomes 5% or less of its maximum value.

The thickness of the oxide film may vary so that it becomes smaller as farther outwardly away from the surface of the positive electrode current collector. This variation may be continuous and may be stepwise, as long as it can be seen as an overall trend.

For example, active material particles are selected at a plurality of points (e.g., 5 points) at different distances from the surface of the positive electrode current collector on a straight line in the thickness direction of the positive electrode active material layer, and the thickness of the oxide film is measured at one or two points of intersection of the above straight line and the outer edge of each active material particle. A plurality of straight lines (e.g., five straight lines) are drawn in the thickness direction of the positive electrode active material layer, and the thickness of the oxide film is measured in a similar manner. The film thicknesses thus calculated are plotted on a graph whose horizontal axis indicates the distance from the surface of the positive electrode current collector and whose vertical axis indicates the film thickness. When the approximate straight line or approximate curve obtained by the least squares method from this graph has a downward slope to the right, it can be said that, as an overall trend, the thickness of the oxide film becomes smaller as farther outwardly away from the surface of the positive electrode current collector.

The thickness Tt of the oxide film at the position of 0.75TA from the surface of the positive electrode current collector in the positive electrode active material layer is not particularly limited. In view of improving the safety in the event of an internal short circuit, the thickness Tt may be 0.1 nm or more, may be 0.5 nm or more, and may be 1 nm or more. In view of suppressing the increase in the resistance of the positive electrode and the diffusion of lithium ions, the thickness Tt of the oxide film may be 50 nm or less, may be 10 nm or less, and may be 2 nm or less. The thickness Tt of the oxide film may be, for example, 0.1 nm or more and 50 nm or less, and may be 0.1 nm or more and 10 nm or less.

The thickness Tb of the oxide film at the position of 0.25TA from the surface of the positive electrode current collector in the positive electrode active material layer is not particularly limited. In view of suppressing the increase in the resistance of the positive electrode and the diffusion of lithium ions, the thickness Tb may be 50 nm or less, may be 30 nm or less, may be 10 nm or less, and may be 2 nm or less. In view of improving the safety in the event of an internal short circuit, the thickness Tb may be 0.1 nm or more, may be 0.5 nm or more, and may be 1 nm or more. The thickness Tb of the oxide film may be, for example, 0.1 nm or more and 50 nm or less, and may be 0.1 nm or more and 30 nm or less.

The average thickness Ta of the oxide film is also not particularly limited. In view of improving the safety in the event of an internal short circuit, the average thickness Ta of the oxide film may be 0.1 nm or more, may be 0.5 nm or more, and may be 1 nm or more. In view of suppressing the increase in the resistance of the positive electrode and the diffusion of lithium ions, the average thickness Ta of the oxide film may be 50 nm or less, may be 10 nm or less, and may be 2 nm or less. The average thickness Ta of the oxide film is, for example, 0.1 nm or more and 50 nm or less.

The average thickness Ta of the oxide film can be calculated by averaging the thickness Tb and the thickness Tt.

The presence probabilities Pb and Pt can be measured by SEM-EDS analysis or EPMA analysis on a cross section of the active material particles. The presence probability may be determined using the spectral intensity ratio for each element for each depth, or may be calculated by the following method, for example. The presence probability Pb is determined as a ratio (Rb = Lb/L) of a sum of lengths Lb of the portions intersecting with the first element, in a straight line having a length L drawn at the position of 0.25TA from the surface of the positive electrode current collector in the positive electrode active material layer, to the length L. The length L is 100 µm or more. Likewise, the presence probability Pt is determined as a ratio (Rb = Lt/L) of a sum of lengths Lt of the portions intersecting with the first element, in a straight line having a length L drawn at the position of 0.75TA from the surface of the positive electrode current collector in the positive electrode active material layer, to the length L. Furthermore, a ratio of the presence probability Pt to Pb, that is, Pt/Pb, may be calculated as a ratio between the frequencies of detecting the first element (a ratio of the detection frequency at the position of 0.75TA to the detection frequency at the position of 0.25TA).

The positive electrode subjected to measurement for the thicknesses Tb and Tt or the presence probabilities Pb and Pt may be taken out from a secondary battery with a depth of discharge (DOD) of 90% or more. The depth of discharge (DOD) represents a ratio of the amount of electricity discharged, to the amount of electricity that a fully charged battery has. The amount of charged electricity (i.e., full charge amount) when a fully discharged battery (DOD = 100%) is charged until full charge (SOC = 100%, DOD = 0%) is reached is equivalent to the rated capacity. The voltage of a fully charged battery corresponds to the end-of-charge voltage. The voltage of a fully discharged battery corresponds to the end-of-discharge voltage.

The first element is an element other than nonmetal elements, and includes metal elements and so-called semimetal elements. Among them, in terms of the safety improvement effect, the first element preferably includes at least one selected from the group consisting of a Group III element, a Group IV element, a group V element, and a group VI element of periodic table. In particular, the first element preferably includes at least one selected from the group consisting of Al, Ti, Si, Zr, Mg, Nb, Ta, Sn, Ni, and Cr.

When the oxide film contains two or more kinds of oxides, the oxides may be mixed or each may be present in a layer.

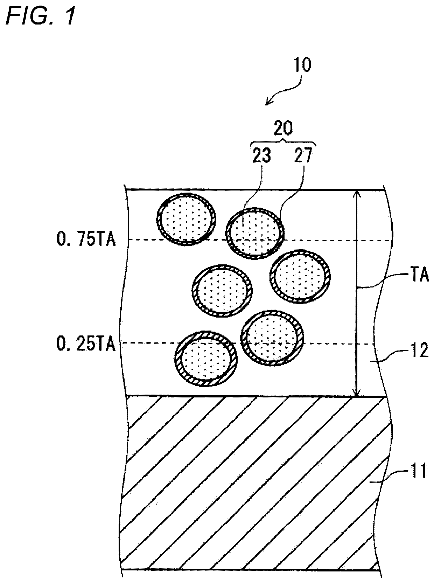

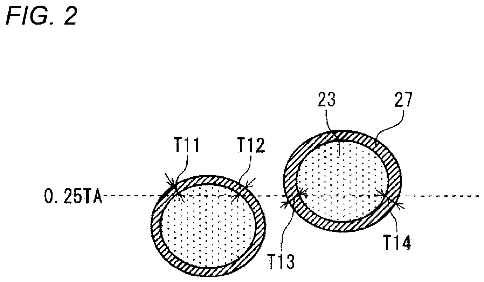

FIG. 1 is a cross-sectional view schematically showing an essential part of a positive electrode according to one embodiment of the present disclosure. FIG. 2 is an enlarged cross-sectional view schematically showing the essential part of the positive electrode of FIG. 1. A positive electrode 10 includes a positive electrode current collector 11 and a positive electrode active material layer 12. The positive electrode active material layer 12 includes active material particles 20 having an oxide film. The active material particles 20 having an oxide film include active material particles 23 and an oxide film 27 covering at least part of the surfaces thereof.

A method of calculating the thickness Tb of the oxide film 27 covering the active material particles 23 located at a position of 0.25TA from the surface of the positive electrode current collector 11 in the positive electrode active material layer 12 will be described with reference to FIG. 2. For convenience, in FIG. 2, only two active material particles 20 having an oxide film are shown. The thickness Tt can also be calculated in a similar manner.

Ten active material particles 23 each partially overlapping a straight line drawn at a position of 0.25TA from the surface of the positive electrode current collector in the positive electrode active material layer and having a maximum diameter of 5 µm or more are selected, where the TA is the thickness of the positive electrode active material layer. For each particle, the thickness of the oxide film at one or two intersections between the straight line and the outer edge of the active material particle 23 is measured (T11, T12, T13, T14, ...). The average value of the thicknesses at up to these 20 points is determined. After calculating this average value, with the data differing by 20% or more from the obtained average value excluded, an average value is calculated again. This corrected average value is determined as the thickness Tb of the first coating at the 0.25TA point.

### B. Secondary battery

A secondary battery according to an embodiment of the present disclosure includes the above-described positive electrode, a negative electrode, a nonaqueous electrolyte, and a separator interposed between the positive electrode and the negative electrode. The secondary battery may be a liquid-type secondary battery containing a liquid electrolyte as the nonaqueous electrolyte, or an all-solid secondary battery containing a solid electrolyte as the nonaqueous electrolyte.

In the following, with a lithium-ion secondary battery according to an embodiment of the present disclosure taken as an example, the configurations of these components will be specifically described.

### [Positive electrode]

As the positive electrode, a positive electrode having the already-described characteristics is used. The positive electrode active material layer is composed of a positive electrode mixture. The positive electrode mixture includes active material particles (particles of positive electrode active material) as an essential component, and may include a binder, a thickener, and the like, as optional components.

The positive electrode active material layer may be in a monolayer structure (a first positive electrode mixture layer only), or in a multilayer structure having a first positive electrode mixture layer and one or more other positive electrode mixture layers with configurations differing from each other. When the first positive electrode mixture layer is closest to the positive electrode current collector, the thickness of the first positive electrode mixture layer may be 10 µm or more and 40 µm or less, and may be 10 µm or more and 30 µm or less. The configurations differing from each other include, for example, the particle diameters of the active material particles differing from each other, the types or compositions of the positive electrode active materials differing from each other, and the like. The positive electrode active material layer being in a multilayer structure having a first positive electrode mixture layer and one or more other positive electrode mixture layers with configurations differing from each other can be easily identified by observing a thickness-wise cross section of the positive electrode active material layer and the positive electrode current collector cut at the same time.

The positive electrode active material layer may include first active material particles having a first average particle diameter D1 and second active material particles having a second average particle diameter D2 (D1 > D2). In this case, the first positive electrode mixture layer and one or more other positive electrode mixture layers may contain the first active material particles and the second active material particles in different proportions. For example, 60 mass% or more or 80 mass% or more of the active material particles contained in the first positive electrode mixture layer may be the first active material particles. For example, 60 mass% or more or 80 mass% or more of the active material particles contained in one or more positive electrode mixture layers other than the first positive electrode mixture layer may be the second active material particles. For example, when the positive electrode active material layer has a two-layer structure including a first positive electrode mixture layer on the positive electrode current collector side and a second positive electrode mixture layer on the first positive electrode mixture layer, 80 mass% or more of the active material particles contained in the first positive electrode mixture layer may be the first active material particles, and 80 mass% or more of the active material particles contained in the second positive electrode mixture layer may be the second active material particles.

The average particle diameter (e.g., the first average particle diameter D1 and the second average particle diameter D2) of the active material particles can be measured from a thickness-wise cross section of the positive electrode mixture layer and the positive electrode current collector cut at the same time. The cross section may be formed using a cross section polisher (CP). At that time, a thermosetting resin may be filled into the positive electrode mixture layer and cured. Next, a scanning electron micrograph (hereinafter, an SEM image) of the cross section is photographed. The SEM image is photographed such that 10 or more active material particles subjected to measurement (e.g., 10 or more first positive electrode active material particles and 10 or more second positive electrode active material particles) are observed. Through image processing, first circle-equivalent diameters of the cross sections of, for example, 10 or more first positive electrode active material particles are measured, and their average value is determined as D1. Through image processing, second circle-equivalent diameters of the cross sections of, for example, 10 or more second positive electrode active material particles are measured, and their average value is determined as D2. Here, the circle equivalent diameter refers to the diameter of a circle having the same area as that of a cross section of the particle (the area of the particle observed in the cross section of the positive electrode mixture layer).

When the first positive electrode active material particles and the second positive electrode active material particles can be separated and collected from the positive electrode mixture layer, the median diameter in a volume-based particle size distribution of each of the first and second positive electrode active material particles (the particle diameter at a cumulative volume of 50%) may be determined as D1 and D2. The volume-based particle size distribution can be measured by a laser diffraction scattering method.

The positive electrode active material constituting the active material particles includes a lithium-containing transition metal oxide. In view of achieving higher capacity, a lithium-nickel composite oxide (composite oxide N) containing at least nickel as a transition metal may be included. The proportion of the composite oxide N in the positive electrode active material is, for example, 70 mass% or more, may be 90 mass% or more, and may be 95 mass% or more.

The composite oxide N may be a lithium-transition metal oxide containing lithium and Ni and having a layered rock-salt type crystal structure. The proportion of Ni in the metal elements other than Li contained in the lithium-transition metal oxide may be 50 atm% or more. The lithium-transition metal oxide may contain Co, but in view of achieving cost reduction and higher capacity, the proportion of Co in the metal elements other than Li contained in the lithium-transition metal oxide is desirably 0 atm% or more and 20 atm% or less, more preferably 0 atm% or more and 15 atm% or less.

It is considered in general that the crystal structure of the composite oxide N in which the proportion of Ni in the metal elements other than Li is 50 atm% or more is apt to change with repeated charging and discharging, tending to cause an increase in resistance. In the present embodiment, since at least part of the surfaces of the active material particles are covered with an oxide film and protected, such an increase in resistance can also be suppressed.

The composite oxide N may contain Ni, and at least one selected from the group consisting of Co, Mn, and Al. Co, Mn, and Al contribute to stabilizing the crystal structure of the composite oxide N.

The proportion of Mn in the metal elements other than Li may be 10 atm% or less, or 5 atm% or less. The proportion of Mn in the metal elements other than Li may be 1 atm% or more, 3 atm% or more, or 5 atm% or more.

The proportion of Al in the metal elements other than Li may be 10 atm% or less, and may be 5 atm% or less. The proportion of Al in the metal elements other than Li may be 1 atm% or more, may be 3 atm% or more, and may be 5 atm% or more.

The composite oxide N is represented, for example, by a formula: Li_{α}Ni_{(1-x1-x2-y-z)}Coₓ₁Mnₓ₂Al_{y}M_{z}O_{2+β}. The element M is an element other than Li, Ni, Co, Mn, Al, and oxygen.

The α representing the atomic ratio of lithium is, for example, 0.95 ≤ α ≤ 1.05, and increases and decreases during charging and discharging.

In the (2+β) representing the atomic ratio of oxygen, β satisfies -0.05 ≤ β ≤ 0.05.

The 1-x1-x2-y-z (= v) representing the atomic ratio of Ni is, for example, 0.8 or more, may be 0.85 or more, and may be 0.90 or more, or 0.95 or more. The v representing the atomic ratio of Ni may be 0.98 or less, and may be 0.95 or less.

The x1 representing the atomic ratio of Co is, for example, 0.1 or less (0 ≤ x1 ≤ 0.1), and may be 0.08 or less, may be 0.05 or less, and may be 0.01 or less. When the x1 is 0, this encompasses a case where Co is below the detection limit.

The x2 representing the atomic ratio of Mn is, for example, 0.1 or less (0 ≤ x2 ≤ 0.1), may be 0.08 or less, may be 0.05 or less, and may be 0.03 or less. The x2 may be 0.01 or more, and may be 0.03 or more.

The y representing the atomic ratio of Al is, for example, 0.1 or less (0 ≤ y ≤ 0.1), may be 0.08 or less, may be 0.05 or less, and may be 0.03 or less. The y may be 0.01 or more, and may be 0.03 or more.

The z representing the atomic ratio of the element M is, for example, 0 ≤ z ≤ 0.10, may be 0 < z ≤ 0.05, and may be 0.001 ≤ z ≤ 0.01.

The element M may be, although not particularly limited to, at least one selected from the group consisting of Ti, Zr, Nb, Mo, W, Fe, Zn, B, Si, Mg, Ca, Sr, Sc, and Y

The composite oxide N is, for example, secondary particles formed of aggregated primary particles. The average particle diameter of the secondary particles of the composite oxide N contained in the whole positive electrode active material is, for example, 3 µm or more and 30 µm or less, and may be 5 µm or more and 25 µm or less.

The average particle diameter of the secondary particles means a particle diameter at 50% cumulative volume (volume average particle diameter) in a particle size distribution measured by a laser diffraction and scattering method. Such a particle diameter is sometimes referred to as D50. As the measuring apparatus, for example, "LA-750", available from Horiba, Ltd. (HORIBA) can be used.

In the positive electrode active material layer, when including first active material particles having a first average particle diameter D1 and second active material particles having a second average particle diameter D2 (D1 > D2), the D1 is, for example, 10 µm or more, may be 11 µm or more, may be 12 µm or more, and may be 15 µm or more. The D1 may be set to 30 µm or less, and may be 25 µm or less. On the other hand, the D2 may be less than 10 µm, may be 8 µm or less, may be 6 µm or less, and may be 5 µm or less. In view of improving the charge-discharge cycle characteristics, the D2 may be set to 1 µm or more, and may be 3 µm or more. The ratio D1/D2, for example, may be set to, 2 or more and 6 or less, and may be set to 3 or more and 5 or less.

As the binder of the positive electrode, for example, a resin material is used. Examples of the binder include fluorocarbon resins, polyolefin resins, polyamide resins, polyimide resins, acrylic resins, and vinyl resins. The binder may be used singly or in combination of two or more kinds.

Examples of the conductive material include carbon nanotubes (CNTs), carbon fibers other than CNTs, and conductive particles (e.g., carbon black, graphite).

Examples of the dispersion medium used in the positive electrode slurry include, but are not particularly limited to, water, alcohols, N-methyl-2-pyrrolidone (NMP), and mixed solvents thereof.

The material of the positive electrode current collector may be made of, for example, stainless steel, aluminum, an aluminum alloy, titanium, and the like. The thickness of the positive electrode current collector is, although not particularly limited to, for example, 1 to 50 µm, and may be 5 to 30 µm.

### [Negative electrode]

The negative electrode includes at least a negative electrode current collector, and may include a negative electrode current collector and a negative electrode active material layer. The negative electrode active material layer is supported on one or both surfaces of the negative electrode current collector.

The negative electrode active material layer may be a negative electrode mixture layer composed of a negative electrode mixture. The negative electrode mixture layer is in the form of a membrane or film. The negative electrode mixture contains particles of a negative electrode active material, as an essential component, and may contain a binder, a conductive agent, a thickener, and the like, as optional components. Alternatively, a lithium metal foil or a lithium alloy foil may be attached as a negative electrode active material layer, onto the negative electrode current collector. In a lithium-metal secondary battery (often simply referred to as a "lithium secondary battery"), the negative electrode active material layer may be absent.

The negative electrode mixture layer can be formed by, for example, applying a negative electrode slurry of a negative electrode mixture containing negative electrode active material particles, a binder, and the like dispersed in a dispersion medium, onto a surface of a negative electrode current collector, followed by drying. The applied film after drying may be rolled as necessary.

The negative electrode active material includes a material that electrochemically absorbs and releases lithium ions, lithium metal, a lithium alloy, and the like. As the material that electrochemically absorbs and releases lithium ions, a carbon material, an alloy-type material, and the like are used. The carbon material is exemplified by graphite, graphitizable carbon (soft carbon), and non-graphitizable carbon (hard carbon). Preferred among them is graphite, which is excellent in stability during charging and discharging and whose irreversible capacity is small. The alloy-type material may be a material containing at least one metal capable of forming an alloy with lithium, examples of which include silicon, tin, a silicon alloy, a tin alloy, and a silicon compound. Silicon oxide, tin oxide, and the like may also be used.

The alloy-type material containing silicon may be, for example, a composite material including a lithium-ion conductive phase and silicon particles dispersed in the lithium-ion conductive phase. As the lithium-ion conductive phase, for example, a silicon oxide phase, a silicate phase, a carbon phase, and the like can be used. The principal component (e.g., 95 to 100 mass%) of the silicon oxide phase can be a silicon dioxide. In particular, a composite material composed of a silicate phase and silicon particles dispersed in the silicate phase is preferable because of its high capacity and low irreversible capacity. Preferred as the silicate phase is a lithium silicate phase (silicate phase containing lithium), which has a small irreversible capacity and exhibits excellent initial charge-discharge efficiency.

The lithium silicate phase is an oxide phase containing lithium (Li), silicon (Si), and oxygen (O), and may contain other elements. The atomic ratio O/Si of O to Si in the lithium silicate phase is, for example, more than 2 and less than 4. Preferably, the O/Si is more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z}, where 0 < z < 2. The z preferably satisfies 0 < z < 1, more preferably z = 1/2. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The amorphous carbon may be, for example, a hard carbon, a soft carbon, or others.

The negative electrode current collector may be a non-porous electrically conductive substrate (e.g., metal foil), a porous electrically conductive substrate (e.g., mesh, net, punched sheet), and the like. The negative electrode current collector may be made of stainless steel, nickel, a nickel alloy, copper, a copper alloy, and the like.

The binder may be, for example, at least one selected from the group consisting of polyacrylic acid, a polyacrylic acid salt, and their derivatives. A preferred polyacrylic acid salt is a Li or Na salt. Particularly preferred is a crosslinked lithium polyacrylate.

Examples of the conductive material include carbon nanotubes (CNTs), carbon fibers other than CNTs, and conductive particles (e.g., carbon black, graphite).

Examples of the thickener include: cellulose derivatives (e.g., cellulose ethers), such as carboxymethyl cellulose (CMC) and modified products thereof (including salts, such as Na salt), and methyl cellulose; saponificated products of a polymer having a vinyl acetate unit, such as polyvinyl alcohol; and polyethers (e.g., polyalkylene oxide, such as polyethylene oxide).

### [Separator]

A separator is interposed between the positive electrode and the negative electrode. The separator is excellent in ion permeability and has moderate mechanical strength and electrically insulating properties. The separator may be a microporous thin film, a woven fabric, a nonwoven fabric, and the like. The separator is preferably made of, for example, polyolefin, such as polypropylene and polyethylene. The separator may have a heat-resistant, electrically-insulating layer as a surface layer on at least one side. The heat-resistant, electrically-insulating insulating layer may contain an inorganic oxide filler as a principal component (e.g., 80 mass% or more), or a heat-resistant resin as a principal component (e.g., 40 mass% or more). The heat-resistant resin may be a polyamide resin, such as aromatic polyamide (aramid), a polyimide resin, a polyamide imide resin, and the like.

### [Nonaqueous electrolyte]

The nonaqueous electrolyte includes, for example, a nonaqueous solvent and a lithium salt dissolved in the nonaqueous solvent. The concentration of the lithium salt in the nonaqueous electrolyte is, for example, 0.5 mol/L or more and 2 mol/L or less. The nonaqueous electrolyte may contain a known additive.

The nonaqueous solvent may be, for example, a cyclic carbonic acid ester, a chain carbonic acid ester, or a cyclic carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). The nonaqueous solvent may be used singly, or in combination of two or more kinds.

Examples of the lithium salt include a lithium salt of a chlorine-containing acid (e.g., LiClO₄, LiAlCl₄, LiB₁₀Cl₁₀), a lithium salt of a fluorine-containing acid (e.g., LiPF₆, LiBF₄, LiSbF₆, LiAsF₆, LiCF₃SO₃, LiCF₃CO₂), a lithium salt of a fluorine-containing acid imide (e.g., LiN(SO₂F)₂, LiN(CF₃SO₂)₂, LiN(CF₃SO₂)(C₄F₉SO₂), LiN(C₂F₅SO₂)₂), and a lithium halide (e.g., LiCl, LiBr, LiI). The lithium salt may be used singly or in combination of two or more kinds.

The lithium-ion secondary battery, for example, has a structure in which an electrode group formed by winding the positive electrode and the negative electrode with the separator interposed therebetween is housed in an outer body, together with the nonaqueous electrolyte. The structure, however, is not limited thereto, and a different form of electrode group may be adopted. For example, a stacked-type electrode group formed by stacking the positive electrode and the negative electrode with the separator interposed therebetween may be adopted. The battery may be in any form, such as cylindrical type, prismatic type, coin type, button type, or laminate type.

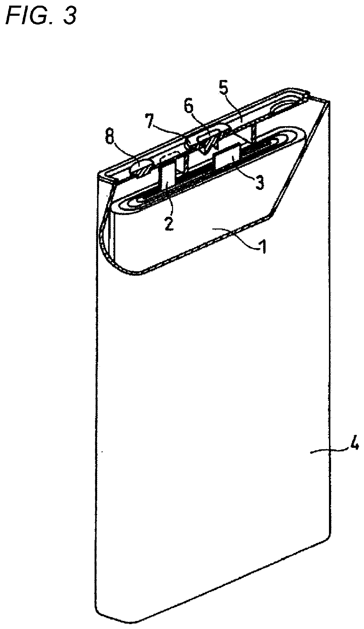

In the following, a structure of a prismatic nonaqueous secondary battery as an example of a lithium-ion secondary battery according to the present invention will be described with reference to FIG. 3.

The battery includes a bottomed prismatic battery case 4, and an electrode group 1 and a liquid electrolyte (not shown) housed in the battery case 4. The electrode group 1 has a long negative electrode, a long positive electrode, and a separator interposed therebetween. The negative electrode current collector of the negative electrode is electrically connected, via a negative electrode lead 3, to a negative electrode terminal 6 provided on a sealing plate 5. The negative electrode terminal 6 is insulated from the sealing plate 5 by a resin gasket 7. The positive current collector of the positive electrode is electrically connected, via a positive lead 2, to the back side of a sealing plate 5. That is, the positive electrode is electrically connected to the battery case 4 which also serves as a positive electrode terminal. The sealing plate 5 is fitted at its periphery to the opening end of the battery case 4, and the fitted portion is laser-welded. The sealing plate 5 is provided with an injection port for nonaqueous electrolyte, and the port is closed with a sealing plug 8 after injection.

### <Production method of positive electrode>

A method for producing a positive electrode according to an embodiment of the present disclosure includes a step of preparing active material particles containing a lithium-containing transition metal oxide, a step of preparing a positive electrode current collector, and a step of forming a positive electrode active material layer containing the active material particles on a surface of the positive electrode current collector.

The step of forming a positive electrode active material layer includes a supporting step of allowing the active material particles to be supported on a surface of the positive electrode current collector, to form a precursor layer, and a film formation step of exposing the active material particles to a gas phase containing a first element other than nonmetal elements, to form an oxide film so as to cover at least part of surfaces of the active material particles.

### (I) Supporting step (S1)

The precursor layer can be formed by applying a positive electrode slurry in which the constituent components of a positive electrode mixture are dispersed in a dispersion medium, onto a surface of a positive electrode current collector, followed by drying. The positive electrode mixture includes active material particles (particles of a positive electrode active material) as an essential component, and can include a binder, a thickener, and the like, as optional components.

Examples of the dispersion medium include, but are not limited to, water, alcohols such as ethanol, ethers such as tetrahydrofuran, amides such as dimethylformamide, N-methyl-2-pyrrolidone (NMP), and mixed solvents thereof.

### (II) Oxide film formation step (S2)

Next, the active material particles supported on the positive electrode current collector are exposed to a gas phase containing a first element. As a result, an oxide film containing an oxide of the first element is formed on at least part of the surfaces of the active material particles. In forming an oxide film, it is preferable that the density of the positive electrode active material of the precursor layer is 2.2 g/cm³ or more and 3.2 g/cm³ or less, preferably 2.5 g/cm³ or more and 3.0 g/cm³ or less. By setting as above, in the film formation step, the gas phase containing a first element is facilitated to enter deep into the positive electrode active material layer and can come in contact more with the active material particles present in the vicinity of the positive electrode current collector. Therefore, a thicker oxide film is likely to be formed on the active material particles located relatively close to the surface of the positive electrode current collector.

As the gas phase method, for example, CVD, atomic layer deposition (ALD), physical vapor deposition (PVD), and other methods can be used. Especially preferred is an ALD method because the oxide film can be formed at a relatively low temperature. According to the ALD method, the oxide film can be formed in an atmosphere of 200 °C or lower.

In the ALD method, an organic metal compound (precursor) containing a first element is used as a raw material of the oxide film. In the ALD method, a vaporized precursor (source gas) and an oxidant are alternately fed into a reaction chamber in which an object to be processed is placed. In this way, an oxide film of the first element is formed on a surface of the object.

According to the ALD method, which allows self-limiting film growth, the first element can deposit on the atomic level on a surface of the object. Therefore, according to the ALD method, by controlling the number of cycles each consisting of: source gas supply (pulsing) -> source gas evacuation (purging) -> oxidant supply (pulsing) -> oxidant evacuation (purging), the overall thickness of the oxide film can be controlled.

The precursor is an organic metal compound containing a first element. As the precursor, various organic metal compounds conventionally used in the ALD method can be used. The metal element constituting the organic metal compound is not particularly limited, and, for example, a precursor containing Ti or Al may be used.

Examples of the precursor containing Ti include bis(t-butylcyclopentadienyl)titanium(IV) dichloride (C₁₈H₂₆Cl₂Ti), tetrakis(dimethylamino)titanium(IV) ([(CR₃)₂N]₄Ti, TDMAT), and tetrakis(diethylamino)titanium(IV) ([(C₂H₅)₂N]₄Ti), tetrakis(ethylmethylamino)titanium(IV) (Ti[N(C₂Hs)(CH₃)]₄), titanium(IV) (diisopropoxide-bis(2,2,6,6-tetramethyl-3,5-heptanedioate (Ti[OCC(CH₃)₃CHCOC(CH₃)₃]₂(OC₃H₇)₂), titanium tetrachloride (TiCl₄), titanium(IV) isopropoxide (Ti[OCH(CH₃)₂]₄), and titanium(IV) ethoxide (Ti[O(C₂H₅)]₄).

Examples of the precursor containing Al include trimethylaluminum ((CH₃)₃Al, TMA).

The source gas may contain a plural kinds of precursors. Into the reaction chamber, different kinds of precursors may be fed simultaneously or one after another. Alternatively, the kind of the precursor contained in the source gas may be changed for each cycle.

As the oxidant, an oxidant conventionally used in the ALD method can be used. Examples of the oxidant include water, oxygen, and ozone. The oxidant may be fed in the form of a plasma generated from the oxidant, into the reaction chamber.

The conditions for the ALD method are not particularly limited. In view of forming a thicker oxide film on the active material particles located in the vicinity of the positive electrode current collector, the temperature of the atmosphere containing the precursor or oxidant may be 10 °C or higher and 200 °C or lower, may be 25 °C or higher and 200 °C or lower, may be 100 °C or higher and 200 °C or lower, and may be 120 °C or higher and 200 °C or lower.

From a similar point of view, the pressure in the reaction chamber during processing may be, for example, 1·10⁻⁵ Pa or more and 1·10⁵ Pa or less, and may be 1·10⁻⁴ Pa or more and 1·10⁴ Pa or less.

When the temperature of the atmosphere containing the precursor or oxidant in the reaction chamber is 10 °C or higher and 200 °C or lower (e.g., 120 °C or higher and 200 °C or lower) and the pressure in the reaction chamber during processing is 1·10⁻⁵ Pa or more and 1·10⁵ Pa or less, the source gas pulsing time may be 0.01 seconds or more, and may be 0.05 seconds or more. The source gas pulsing time may be 5 seconds or less, and may be 3 seconds or less.

After performing the above supporting step S1 and oxide film formation step S2, the supporting step S1 may be further performed. For example, a positive electrode active material layer including a first positive electrode mixture layer being closest to the positive electrode current collector and containing active material particles covered with an oxide film, and a second positive electrode mixture layer containing active material particles not covered with the oxide film may be formed. Thereafter, the oxide film formation step S2 may be further performed.

### (III) Rolling step (S3)

The precursor layer (i.e., the positive electrode active material layer) with the oxide film formed therein may be rolled. The conditions for rolling are not particularly limited, and may be appropriately set so that the positive electrode active material layer has a predetermined thickness or density. The density of the positive electrode active material in the positive electrode active material layer is, for example, preferably 2.5 g/cm³ or more and 4.0 g/cm³ or less, and may be preferably 3.3 g/cm³ or more and 3.7 g/cm³ or less.

The above method is merely an example, and the positive electrode active material layer may be rolled, and then, the oxide film may be formed. In that case, the method for forming an oxide film is not limited to the above method.

In the following, the present disclosure will be specifically described by way of Examples and Comparative Examples. It is to be noted however that the present disclosure is not limited to the following Examples.

### «Example 1»

### [Production of positive electrode]

For a positive electrode active material constituting active material particles, a composite oxide N (LiNi_{0.85}Co_{0.10}Al_{0.05}O₂) having a layered rock-salt type crystal structure and containing Ni was used. An aluminum foil with a thickness of 15 µm was prepared as a positive electrode current collector.

The median diameter D1 of the active material particles in the volume-based particle size distribution thereof measured by a laser diffraction scattering method was 13 µm.

To a positive electrode mixture containing the active material particles (D1 = 13 µm), acetylene black, and polyvinylidene fluoride (PVDF) in a mass ratio of 95:2.5:2.5, NMP was added, and stirred, to prepare a positive electrode slurry.

### (I) Supporting setp (S1)

The positive electrode slurry was applied onto a surface of the aluminum foil serving as the positive electrode current collector, and the applied film was dried, to form a precursor layer of a positive electrode active material layer on each of both surfaces of the aluminum foil.

### (II) Oxide film formation step (S2)

A laminate (positive electrode precursor) of the positive electrode current collector and the precursor layer was placed in a predetermined reaction chamber, and part of the active material particles in the precursor layer was coated with an oxide film by the following procedures, using an ALD method.

Tetrakis(dimethylamino)titanium(IV) (TDMAT) serving as a precursor to be a supply source of a first element (Ti) was vaporized and fed into the reaction chamber containing the positive electrode precursor. The pulsing time was set to 0.1 seconds. The temperature of the atmosphere containing the precursor in the reaction chamber was controlled to 150 °C, and the pressure was controlled to 260 Pa. After 30 seconds, on the assumption that the surface of the positive electrode precursor has been covered with a monomolecular layer of the precursor, the excess precursor was purged with nitrogen gas.

Next, an oxidant (H₂O) was vaporized and fed into the reaction chamber containing the positive electrode precursor. The pulsing time was set to 0.015 seconds. The temperature of the atmosphere containing the oxidant in the reaction chamber was controlled to 150 °C, and the pressure was controlled to 260 Pa. After 30 seconds, the excess oxidant was purged with nitrogen gas.

A series of operations (ALD cycle) consisting of feeding and purging of the precursor and feeding and purging of the oxidant was repeated 200 times, to form an oxide film containing titanium.

The oxide film was analyzed by SEM, EDS, ICP, and the like. The result found that the oxide film contained Ti. The thickness Tb of the oxide film covering the active material particles located at a position of 0.25TA from the surface of the positive electrode current collector in the positive electrode active material layer was 10 nm. The thickness Tt of the oxide film covering the active material particles located at a position of 0.75TAfrom the surface of the positive electrode current collector in the positive electrode active material layer was 6 nm. The average thickness Ta of the oxide film was 8 nm. The result of EPMA analysis found Pt/Pb ≈ Tt/Tb = 0.6.

### (III) Rolling step (S3)

Next, the precursor layer (i.e., positive electrode active material layer) with the oxide film formed thereof was rolled, to adjust the density of the positive electrode active material in the positive electrode active material layer after rolling to 3.6 g/cm³. The overall thickness of the positive electrode after rolling was 160 µm.

### [Production of negative electrode]

Water was added to a negative electrode mixture containing graphite serving as a negative electrode active material, sodium carboxymethyl cellulose (CMC-Na), and styrenebutadiene rubber (SBR) in a mass ratio of 96:2:2, and stirred, to prepare a negative electrode slurry. Next, a negative electrode slurry was applied onto a surface of a copper foil serving as a negative electrode current collector, and the applied film was dried, and then rolled, to form a negative electrode active material layer on each of both surfaces of the copper foil. The density of the negative electrode active material in the negative electrode active material layer was adjusted to 1.6 g/cm³. The overall thickness of the negative electrode was 170 µm.

### [Preparation of nonaqueous electrolyte]

A nonaqueous electrolyte was prepared by dissolving LiPF₆ at a concentration of 1.0 mol/L in a mixed solvent containing ethylene carbonate (EC) and diethyl carbonate (DEC) in a volume ratio of 3:7.

### [Fabrication of secondary battery]

With a tab attached to each electrode, the positive electrode and the negative electrode were wound spirally with a separator interposed therebetween such that the tab was positioned at the outermost layer, thereby to form an electrode group. The electrode group was inserted into an outer body made of aluminum laminated film and dried under vacuum at 105 °C for two hours. Thereafter, the liquid electrolyte was injected, and the opening of the outer body was sealed. A secondary battery A1 was thus fabricated.

### «Example 2»

A positive electrode and a secondary battery A2 were produced in the same manner as in Example 1, except that in the oxide film formation step S2, the ALD cycle was repeated 100 times. The thicknesses Tb, Tt, and Ta of the oxide film were 5 nm, 3 nm, and 4 nm, respectively.

### «Example 3»

A positive electrode and a secondary battery A3 were produced in the same manner as in Example 1, except that in the oxide film formation step S2, the ALD cycle was repeated 60 times. The thicknesses Tb, Tt, and Ta of the oxide film were 3 nm, 1.5 nm, and 2.3 nm, respectively.

### «Example 4»

A positive electrode and a secondary battery A4 were produced in the same manner as in Example 1, except that in the oxide film formation step S2, the ALD cycle was repeated 20 times. The thicknesses Tb, Tt, and Ta of the oxide film were 1 nm, 0.6 nm, and 0.8 nm, respectively.

### «Example 5»

A positive electrode and a secondary battery A5 were produced in the same manner as in Example 1, except that in the oxide film formation step S2, the temperatures of the atmospheres containing the precursor and oxidant in the reaction chamber were changed to 120 °C, and the ALD cycle was repeated 100 times. The thicknesses Tb, Tt and Ta of the oxide film were 5 nm, 1 nm and 3 nm, respectively.

«Example 6»

A positive electrode and a secondary battery A5 were produced in the same manner as in Example 1, except that in the oxide film formation step S2, the temperatures of the atmospheres containing the precursor and oxidant in the reaction chamber were changed to 180 °C, and the ALD cycle was repeated 100 times. The thicknesses Tb, Tt, and Ta of the oxide film were 5 nm, 4 nm, and 4.5 nm, respectively.

### «Example 7»

In the supporting step S1, the precursor layer of the positive electrode active material layer was dividedly applied in two times so that the thickness ratio between the first layer and the second layer was 10:10. In the oxide film formation step S2, the temperatures of the atmospheres containing the precursor and oxidant in the reaction chamber were changed to 200 °C, and the ALD cycle was repeated 60 times. Here, the oxide film forming step S2 was performed after forming the first layer and before forming the second layer. Except for the above, a positive electrode and a secondary battery A7 were produced in the same manner as in Example 1. The thicknesses Tb, Tt, and Ta of the oxide film were 3 nm, 0 nm, and 1.5 nm, respectively.

### «Example 8»

In the supporting step S1, the precursor layer of the positive electrode active material layer was dividedly applied in two times so that the thickness ratio between the first layer and the second layer was 10:10. In the oxide film formation step S2, the temperatures of the atmospheres containing the precursor and oxidant in the reaction chamber were changed to 200 °C. The ALD cycle was repeated 60 times after forming the first layer and before forming the second layer, and then, the second positive electrode mixture layer was formed, and the ALD cycle was further repeated 20 times. Except for the above, a positive electrode and a secondary battery A8 were produced in the same manner as in Example 1. The thicknesses Tb, Tt, and Ta of the oxide film were 3 nm, 1 nm, and 2 nm, respectively.

### <<Comparative Example 1>>

A positive electrode and a secondary battery B1 were produced in the same manner as in Example 1, except that in the oxide film formation step S2, the temperatures of the atmospheres containing the precursor and oxidant in the reaction chamber were changed to 200 °C. The thicknesses Tb, Tt and Ta of the oxide film were 10 nm, 10 nm and 10 nm, respectively.

### <<Comparative Example 2»

A positive electrode and a secondary battery B2 were produced in the same manner as in Comparative Example 1, except that in the oxide film formation step S2, the ALD cycle was repeated 100 times. The thicknesses Tb, Tt and Ta of the oxide film were 5 nm, 5 nm and 5 nm, respectively.

### <<Comparative Example 3>>

A positive electrode and a secondary battery B3 were produced in the same manner as in Comparative Example 1, except that in the oxide film formation step S2, the ALD cycle was repeated 60 times. The thicknesses Tb, Tt, and Ta of the oxide film were 3 nm, 3 nm, and 3 nm, respectively.

### <<Comparative Example 4>>

A positive electrode and a secondary battery B4 were produced in the same manner as in Comparative Example 1, except that in the oxide film formation step S2, the ALD cycle was repeated 20 times. The thicknesses Tb, Tt, and Ta of the oxide film were 1 nm, 1 nm, and 1 nm, respectively.

### <<Comparative Example 5>>

A positive electrode and a secondary battery B5 were produced in the same manner as in Comparative Example 1, except that the oxide film formation step S2 was not performed.

### [Evaluation]

The secondary batteries obtained in Examples and Comparative Examples were evaluated as follows.

### (1) Direct current resistance value (DCIR)

In a 25 °C temperature environment, the battery was constant-current charged at a current of 0.3 It until the voltage reached 4.2 V, and then, constant-voltage charged at a constant voltage of 4.2 V until the current reached 0.05 It. Subsequently, the battery was discharged at a constant current of 0.3 It for 100 minutes, so that the state of charge (SOC) reached 50%.

The voltage values were measured when the SOC 50% battery was discharged for 10 seconds at current values of 0 A, 0.1 A, 0.5 A, and 1.0 A, respectively. The relationship between the discharge current values and the voltage values after 10 seconds was linearly approximated by a least squares method, and from the absolute value of the slope of the line, a DCIR (initial DCIR) was calculated. Table 1 shows relative values when the DCIR of the battery B5 of Comparative Example 5 is taken as 100%. The larger the relative value is, the higher the resistance is.

### (2) Nail penetration test

(a) In a 25 °C environment, the battery was charged at a constant current of 0.3 It until the battery voltage reached 4.2 V, and then, continuously, charged at the constant voltage until the current value reached 0.05 It.
(b) In a 25 °C environment, the tip of a round nail (diameter 2.7 mm) was brought into contact with the center of the battery charged in (a), and driven thereinto at a speed of 1 mm/sec, and immediately after the detection of a drop in battery voltage (Δ50 mV) due to an internal short circuit, the driving of the round nail was stopped. The surface temperature of the battery was measured one minute after the battery was short-circuited.

**[Table 1]**

| secondary battery | ALD cycle | temperature in reaction chamber (°C) | 1st/2nd layers thickness ratio | Tt/Tb | DCIR (%) | surface temperature (°C) |
|---|---|---|---|---|---|---|
| A8 | 60 + 20 | 200 | 10:10 | 0.33 | 108 | 25 |
| A7 | 60 | 200 | 10:10 | 0 | 105 | 26 |
| A6 | 100 | 180 | - | 0.8 | 125 | 25 |
| A5 | 100 | 120 | - | 0.2 | 120 | 25 |
| A1 | 200 | 150 | - | 0.6 | 120 | 25 |
| A2 | 100 | 150 | - | 0.6 | 115 | 25 |
| A3 | 60 | 150 | - | 0.5 | 108 | 28 |
| A4 | 20 | 150 | - | 0.6 | 104 | 33 |
| B5 | 0 | - | - | - | 100 | >80 |
| B4 | 20 | 200 | - | 1 | 110 | 35 |
| B3 | 60 | 200 | - | 1 | 130 | 30 |
| B2 | 100 | 200 | - | 1 | 150 | 25 |
| B1 | 200 | 200 | - | 1 | 200 | 25 |

Table 1 shows that in the batteries A1 to A8, the increase in resistance was suppressed while the safety when an internal short circuit occurred in the battery was improved. In the batteries B1 to B3, although the safety when an internal short circuit occurred in the battery was improved, it was difficult to suppress the increase in resistance. In the batteries B4 and B5, although the increase in resistance was suppressed, it was difficult to improve the safety when an internal short circuit occurred in the battery.

### [Industrial Applicability]

The positive electrode for a secondary battery according to the present disclosure and a secondary battery including the same are useful as main power sources for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug
- 10: positive electrode
11 positive electrode current collector
12 positive electrode active material layer
- 20: active material particles having oxide film
23 active material particles
27 oxide film

## Claims

1. A positive electrode for a secondary battery, comprising:
a positive electrode current collector; and a positive electrode active material layer supported on the positive electrode current collector, wherein
the positive electrode active material layer includes active material particles and an oxide film covering at least part of surfaces of the active material particles,
the active material particles include a lithium-containing transition metal oxide,
the oxide film contains an oxide of a first element other than nonmetal elements, and
Tb > Tt or Pb > Pt is satisfied, where
when a thickness of the positive electrode active material layer is denoted by TA,
the Tb is a thickness of the oxide film and the Pb is a presence probability of the first element at a position of 0.25TA from a surface of the positive electrode current collector in the positive electrode active material layer, and
the Tt is a thickness of the oxide film and the Pt is a presence probability of the first element at a position of 0.75TA from the surface of the positive electrode current collector in the positive electrode active material layer.

2. The positive electrode for a secondary battery according to claim 1, wherein the thickness Tb and the thickness Tt, or the presence probability Pb and the presence probability Pt satisfy 0 ≤ Tt/Tb < 1 or 0 ≤ Pt/Pb < 1.

3. The positive electrode for a secondary battery according to claim 1 or 2, wherein the first element includes at least one selected from the group consisting of a Group III element, a Group IV element, a Group V element, and a Group VI element of periodic table.

4. The positive electrode for a secondary battery according to any one of claims 1 to 3, wherein the first element includes at least one selected from the group consisting of Al, Ti, Si, Zr, Mg, Nb, Ta, Sn, Ni, and Cr.

5. The positive electrode for a secondary battery according to any one of claims 1 to 4, wherein an average thickness Ta of the oxide film is 0.1 nm or more and 50 nm or less.

6. A secondary battery, comprising: the positive electrode for a secondary battery of any one of claims 1 to 5; a negative electrode; a nonaqueous electrolyte; and a separator interposed between the positive electrode and the negative electrode.

7. A method for producing a positive electrode for a secondary battery, the method comprising:
a step of preparing active material particles including a lithium-containing transition metal oxide;
a step of preparing a positive electrode current collector; and
a step of forming a positive electrode active material layer including the active material particles on a surface of the positive electrode current collector;
the step of forming a positive electrode active material layer including
a supporting step of allowing the active material particles to be supported on a surface of the positive electrode current collector, to form a precursor layer, and
a film formation step of, after the supporting step, exposing the active material particles to a gas phase containing a first element other than nonmetal elements, to form an oxide film so as to cover at least part of surfaces of the active material particles, wherein
the oxide film contains an oxide of the first element, and
Tb > Tt or Pb > Pt is satisfied, where
when a thickness of the positive electrode active material layer is denoted by TA,
the Tb is a thickness of the oxide film and the Pb is a presence probability of the first element at a position of 0.25TA from a surface of the positive electrode current collector in the positive electrode active material layer, and
the Tt is a thickness of the oxide film and the Pt is a presence probability of the first element at a position of 0.75TA from the surface of the positive electrode current collector in the positive electrode active material layer.

8. The method for producing a positive electrode for a secondary battery according to claim 7, wherein the film formation step is performed by an atomic layer deposition method.
